(19) Europäisches Patentamt
European Patent Office
Office européen des brevets

(11) **EP 2 512 755 B1**

(12) **EUROPÄISCHE PATENTSCHRIFT**

(45) Veröffentlichungstag und Bekanntmachung des Hinweises auf die Patenterteilung:
**05.08.2015 Patentblatt 2015/32**

(21) Anmeldenummer: **10790736.2**

(22) Anmeldetag: **08.12.2010**

(51) Int Cl.:
***B25J 9/16*** *(2006.01)*

(86) Internationale Anmeldenummer:
**PCT/EP2010/007472**

(87) Internationale Veröffentlichungsnummer:
**WO 2011/082755 (14.07.2011 Gazette 2011/28)**

(54) **VERFAHREN UND VORRICHTUNG ZUM STEUERN EINES MANIPULATORS**

METHOD AND DEVICE FOR CONTROLLING A MANIPULATOR

PROCÉDÉ ET DISPOSITIF POUR COMMANDER UN MANIPULATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2009 DE 102009058607**

(43) Veröffentlichungstag der Anmeldung:
**24.10.2012 Patentblatt 2012/43**

(60) Teilanmeldung:
**14004416.5 / 2 883 665**

(73) Patentinhaber: **KUKA Laboratories GmbH
86165 Augsburg (DE)**

(72) Erfinder:
• **KLUMPP, Simon
73765 Neuhausen (DE)**
• **SCHREIBER, Günter
86316 Derching (DE)**

(74) Vertreter: **Schlotter, Alexander Carolus Paul
Wallinger Ricker Schlotter Tostmann
Patent- und Rechtsanwälte
Zweibrückenstrasse 5-7
80331 München (DE)**

(56) Entgegenhaltungen:
**EP-A1- 0 901 054     EP-A2- 1 950 010
EP-A2- 2 045 049**

**Beschreibung**

Die vorliegende Erfindung betrifft ein Verfahren und eine Vorrichtung zum Steuern eines Manipulators, insbesondere eines Roboters, sowie ein Haltewerkzeug für einen erfindungsgemäß verwendeten Manipulator.

Industrieroboter sollen unter anderem zum Fügen von Bauteilen eingesetzt werden. Dabei erschweren insbesondere Positionstoleranzen von angelieferten Werkstücken, die mit vom Roboter gehaltenen Werkstücken gefügt werden sollen, die Automatisierung.

Neben konstruktiven Nachgiebigkeiten, etwa einem flexiblen Roboter oder einer flexiblen Endeffektoranbindung, zum Beispiel durch ein sogenanntes Remote Center of Compliance ("RCC"), sind in der Forschung diverse theoretische Lösungsansätze solcher sogenannter Bolzen-Loch-Probleme vorgeschlagen worden, beispielsweise die Erfassung von Kontaktkräften durch zusätzliche Kraftsensoren und die Ermittlung der korrekten Fügetrajektorie auf Basis dieser Kontaktkräfte. Diese Ansätze wurden jedoch bislang aufgrund verschiedener Probleme kaum in der Praxis umgesetzt.

Die EP 0 901 054 A1 offenbart ein Verfahren zur Steuerung eines Roboters, das dazu eingerichtet ist, ein Werkstück auf einen Pfad zu bewegen und bei Kontakt mit der Umgebung eine jeweilige Reglerverstärkung eines Positions- und eines Geschwindigkeitsregelkreis so zu ändern, dass das durch den Roboter geführte Werkstück eingespannt werden kann.

Die EP 2 045 049 A2 offenbart eine Vorrichtung und ein Verfahren zur Steuerung eines Manipulators, so dass dieser eine Position findet und bei Kontakt mit einer Umgebung eine Kraft aufbringen kann. Sobald der Endeffektor des Manipulators in einer Nähe einer vorbestimmten Position ist, kann die Regelverstärkung des Bewegungsregelkreises reduziert werden.

Die EP 1 950 010 A2 offenbart ein Verfahren zum Programmieren eines Roboters. Dabei fährt der Roboter zunächst manuell gesteuert einen Raumpunkt an, danach werden Kräfte und Drehmomente, die der Roboter im angefahrenen Raumpunkt erzeugt, erfasst und gespeichert. Aus dieser Information wird danach eine Bahntrajektorie geplant. Bei Kontakt mit einer Umgebung kann in ein anderes Regelungsverfahren, z.B. eine Kraftregelung, umgeschaltet werden.

Aufgabe der vorliegenden Erfindung ist es, die Steuerung eines Manipulators zu verbessern.

Diese Aufgabe wird durch ein Verfahren mit den Merkmalen des Anspruchs 1 gelöst. Anspruch 8 stellt eine Vorrichtung, Anspruch 9 ein Computerprogrammprodukt, insbesondere ein Speichermedium oder einen Datenträger, zur Durchführung eines erfindungsgemäßen Verfahrens unter Schutz. Die Unteransprüche betreffen vorteilhafte Weiterbildungen.

Ein Verfahren bzw. eine Vorrichtung nach der vorliegenden Erfindung ist insbesondere für einen ein- oder mehr-, beispielsweise sechsachsigen oder redundanten Roboter wie zum Beispiel einen Industrieroboter oder einen Leichtbauroboter, etwa den Leichtbauroboter "LBR" der Anmelderin, vorgesehen. Dabei wird unter einem Steuern auch ein Regeln, i.e. die Vorgabe von Steuergrößen auf Basis vorgegebener Führungs- und erfasster Ist-Größen, verstanden.

Erfindungsgemäß wird eine Kontaktkraft auf Basis tatsächlicher Antriebskräfte und Antriebskräften eines dynamischen Modells des Manipulators erfasst.

Zur kompakteren Darstellung wird vorliegend auch ein Drehmoment, i.e. ein antiparalleles Kräftepaar, verallgemeinernd als Kraft bezeichnet, so dass beispielsweise unter dem Erfassen einer Kontaktkraft die Erfassung von Kraft- und/oder Drehmomentkomponenten in einer oder mehreren Richtungen, insbesondere kartesischen Raumrichtungen oder Gelenkachsen, verstanden und auch ein Antriebsdrehmoment beispielsweise eines Elektromotors als Antriebskraft bezeichnet wird.

Tatsächliche Antriebskräfte können beispielsweise direkt, etwa mittels Kraftsensoren an einer Achse oder einem Antrieb des Manipulators, und/oder indirekt, zum Beispiel auf Basis einer Leistungsaufnahme oder -abgabe eines Antriebs erfasst werden.

Ein dynamisches Modell beschreibt allgemein den Zusammenhang zwischen kinematischen Größen, insbesondere Gelenkkoordinaten $q$, -geschwindigkeiten $\mathrm{d}q/\mathrm{d}t$ und -beschleunigungen $\mathrm{d}^2q/\mathrm{d}t^2$, und Kräften, insbesondere Antriebs-, Gewichts- und Reibungskräften, etwa in der Form

$$\boldsymbol{M}\,\mathrm{d}^2\boldsymbol{q}/\mathrm{d}t^2 + \boldsymbol{h}(\boldsymbol{q},\,\mathrm{d}\boldsymbol{q}/\mathrm{d}t) = \tau_{\mathrm{Modell}}$$

mit der Massenmatrix $\boldsymbol{M}$ und den generalisierten Kräften h. Sind die kinematischen Größen sowie Gewichts- und Reibungskräften bekannt, resultieren Unterschiede zwischen den Antriebskräften $\tau_{\mathrm{Modell}}$ des Modells und den tatsächlichen Antriebskräften $\tau$ neben Modell- und Messfehlern insbesondere aus im Modell nicht vorgesehenen Kontaktkräften, die somit aufgrund der Differenz zwischen tatsächlich gemessenen und Modell-Antriebskräften erfasst werden können:

$$\boldsymbol{F}_{\mathrm{Kontakt}} = \boldsymbol{F}(\tau_{\mathrm{Modell}} - \tau)$$

Diese Erfassung von Kontaktkräften zwischen dem Manipulator und einem Werkstück auf Basis tatsächlicher Antriebskräfte und Antriebskräften eines dynamischen Modells spart zusätzliche Kraftsensoren und ermöglicht in vorteilhafter Weise eine nachfolgend erläuterte Vermessung, Fügeüberwachung und/oder Umschaltung in eine nachgiebige Regelung.

Gemäß einer Ausführung der vorliegenden Erfindung werden eine oder mehrere Posen, insbesondere zum Vermessen oder Fügen von Werkstücken, mit dem steif geregelten Manipulator angefahren. Unter einer steifen Regelung wird insbesondere eine Positionsreglung verstanden, beispielsweise eine Proportional-, Differential- und/oder Integralregelung, etwa einer kartesischen Position eines Referenzpunktes wie zum Beispiel des TCPs, oder in Gelenkkoordinaten des Manipulators.

Dabei werden kontinuierlich oder zu diskreten Zeitpunkten eine oder mehrere Kontaktkräfte erfasst, die bei einem Kontakt mit einem angefahrenen Werkstück auf den Manipulator wirken.

Übersteigt eine erfasste Kontaktkraft einen vorgegebenen Wert, der insbesondere auch Null betragen kann, gegebenenfalls unter Berücksichtigung entsprechender Toleranzen, wird erfindungsgemäß in eine nachgiebige Regelung umgeschaltet. Vorzugsweise erfolgt eine solche Umschaltung innerhalb von höchstens 3 Millisekunden nach Eintritt eines Kontaktes, bevorzugt innerhalb von höchstens 1,5 Millisekunden.

Eine nachgiebige Regelung bzw. ein Umschalten in eine solche kann beispielsweise dadurch realisiert werden, dass Regelkoeffizienten einer P- oder PD-Regelung reduziert werden und/oder ein Integralanteil einer PID-Regelung entfällt, so dass der Manipulator auch bei größeren Regelabweichungen bzw. Schleppfehlern zwischen Soll- und Ist-Pose keine hohen Antriebskräfte aufbringt. Zusätzlich oder alternativ kann auch eine Antriebskraft auf einen, vorzugsweise niedrigen, Maximalwert begrenzt werden, so dass wiederum auch bei größeren Schleppfehlern keine hohen Antriebskräfte erzeugt werden. In einer bevorzugten Ausführung ist eine nachgiebige Regelung als sogenannte Impedanzregelung, insbesondere kraftbasierte Impedanzregelung ausgebildet. Allgemein wird als nachgiebige Regelung im Gegensatz zu einer steifen Regelung vorliegend insbesondere jede Regelung bezeichnet, bei der Antriebskräfte des Manipulators derart erzeugt werden, dass bei einem Kontakt mit einem Werkstück weder dieses noch der Manipulator beschädigt werden, auch wenn eine vorgegebene Soll-Pose ein weiteres Eindringen des Manipulators in das Werkstück erfordert.

In einer bevorzugten Ausführung wird dann ein Werkstück unter der nachgiebigen Regelung gefügt und/oder seine Position auf Basis erfasster Kontaktkräfte in einem mehrstufigen Verfahren vermessen. Auf diese Weise können, insbesondere in Verbindung mit einem Leichtbauroboter mit seinen geringeren Trägheiten, Taktzeiten vorteilhaft reduziert werden, da nunmehr eine Vermessungs- oder Fügegrundpose unter der steifen Regelung rasch und präzise angefahren werden kann, ohne dass die Gefahr besteht, beim Vermessens bzw. Fügen das Werkstück oder den Manipulator zu beschädigen, da bei Kontakt unverzüglich in die nachgiebige Regelung umgeschaltet wird.

Erfindungsgemäß wird ein Werkstück unter nachgiebiger Regelung gefügt und dabei ein Fügezustand des Werkstückes auf Basis einer erfassten Kontaktkraft überwacht. Durch Überwachen einer Kontaktkraft kannaufgrund eines, insbesondere signifikanten, Abfalls ein Einschnappen eines unter elastischer oder plastischer Deformation gefügten Werkstückes und damit ein korrekter Fügevorgang erkannt werden. So nimmt beispielsweise beim Fügen unter elastischer Deformation zunächst eine Kontaktkraft, insbesondere entgegen der Fügerichtung, zu. Entspannt sich das Werkstück, zum Beispiel nach Überwinden einer Wulst, fällt diese Kraft signifkant ab. Ebenso kann beispielsweise aus einem Drehmoment, welches eine gefügte Schraube als Kontaktkraft auf den Manipulator ausübt, die erfindungsgemäß erfasst wird, der Verspannungszustand der Schraube überprüft und festgestellt werden, ob ein Schraubenkopf abgedreht wurde.

Zusätzlich kann ein Fügezustand des Werkstückes auf Basis einer unter der nachgiebigen Regelung erreichten Endpose des Manipulators überwacht werden. Durch eine nachgiebige Regelung kann erreicht werden, dass der Manipulator unabhängig vom Erreichen einer Soll-Fügeendpose das Werkstück nicht mehr weiter in Fügerichtung bewegt. Wird die unter der nachgiebigen Regelung erreichten Endpose mit der Soll-Fügeendpose verglichen, die beispielsweise durch Teachen eines Roboters bestimmt werden kann, kann bestimmt werden, ob der Fügevorgang korrekt ausgeführt worden ist.

Zusätzlich kann ein Fügezustand des Werkstückes auch auf Basis einer unter der nachgiebigen Regelung erfolgenden zeitlichen Änderung der Pose des Manipulators überwacht werden, insbesondere auf Basis einer Geschwindigkeit. Unterschreitet beispielsweise eine Geschwindigkeit des TCPs bzw. des manipulatorgeführten Werkstückes in Fügerichtung einen Grenzwert, kann erfasst werden, dass das Werkstück korrekt gefügt ist.

Ist dies nicht der Fall, da beispielsweise das zu fügende Werkstück durch eine Störkontur behindert wird, kann eine Fügestrategie, insbesondere eine Fügeposition, verändert werden, indem beispielsweise versucht wird, einen Bolzen in einer zur ursprünglichen Fügegrundposition versetzten neuen Ausgangsposition zu fügen.

Gemäß einer bevorzugten Ausführung werden bei einem Fügen eines Werkstückes unter einer nachgiebigen Regelung sowohl eine oder mehrere Soll-Kräfte als auch eine oder mehrere Soll-Bewegungen vorgegeben. Wird die nachgiebige Regelung beispielsweise durch eine kraftbasierte Impedanzregelung realisiert, indem etwa Antriebskräfte $\tau$ gemäß

$$\tau = J^{\mathsf{T}}[c(x_{\mathrm{soll}} - x)]$$

durch eine mittels der transponierten Jacobimatrix J in den Raum der Gelenkkoordinaten, etwa der Drehwinkel eines Knickarmroboters, projizierte Federkraft einer virtuellen Feder mit der Federkonstanten c zwischen einer kartesischen Soll- und Ist-Position $x_{\mathrm{roll}}$ bzw. x etwa des TCPs bestimmt werden, kann der Soll-Bewegung gemäß

$$\tau = \boldsymbol{J}^T[\boldsymbol{c}(\boldsymbol{x}_{soll} - \boldsymbol{x}) + \boldsymbol{F}]$$

eine im kartesischen Raum definierte Kraft hinzugefügt werden. Dies kann bevorzugt wahlweise, beispielsweise in Abhängigkeit des bereits erfolgten Fügevorgangs oder der Fügestrategie für das jeweilige Werkstück erfolgen. Die Soll-Kraft kann beispielsweise konstant, rampenförmig, wechselnd oder schwellend, insbesondere sinusförmig vorgegeben werden, um beispielsweise Stick-Slip-Phänomene, Grate oder kleinere elastische Toleranzen beim Fügen zu überwinden.

Insbesondere, um Werkstücke miteinander zu fügen, ist es erforderlich, eine Position, i.e. eine Lage und/oder Orientierung, eines Werkstückes, beispielsweise eines Grundkörpers, relativ zu dem Manipulator zu kennen, der ein damit zu fügendes Werkstück hält, beispielsweise einen Bolzen, eine Klammer oder dergleichen. Daher wird gemäß einer Weiterbildung der vorliegenden Erfindung eine Position eines Werkstückes mittels des Manipulators in einem mehrstufigen Verfahren vermessen.

Nach dieser Weiterbildung werden Positionen von vorzugsweise wenigstens zwei nicht fluchtenden Konturen, insbesondere Kanten, des Werkstückes bestimmt, indem Posen des Manipulators und dabei auf ihn wirkende Kontaktkräfte erfasst werden. Steigt eine Kontaktkraft beim Einnehmen einer Pose signifikant an, da ein Taster des Manipulators eine Kontur des Werkstückes kontaktiert, kann aus der zugehörigen Pose des Manipulators die Kontaktposition ermittelt werden.

Ist auf diese Weise die Position des Werkstückes relativ zum Manipulator grob bekannt, können nun Referenzpunkte des Werkstückes, die beispielsweise durch Aussparungen, insbesondere Bohrungen, definiert sein können, prozesssicher angefahren werden. Bei Kontakt eines Tasters mit einem Referenzpunkt, beispielsweise Hineingleiten eines Tasters in eine Aussparung, kann aufgrund eines Anstiegs einer entsprechenden Kontaktkraft, die einer Weiterbewegung des Tasters entgegenwirkt, die Position dieses Referenzpunktes bestimmt werden. Auf Basis dieser Referenzpunkte kann ein Werkstückkoordinatensystem bestimmt werden, welches im Gegensatz zu den zur Groborientierung angefahrenen Konturen eine präzise Bestimmung beispielsweise von Fügepositionen und dergleichen ermöglicht.

Vorzugsweise wird ein Referenzpunkt mit einem Taster pertubierend angefahren, i.e. der Manipulator bewegt den Taster in der unmittelbaren Nähe der vorab geschätzten Position des Referenzpunktes längs einer festgelegten Suchstrecke, vorzugsweise in einer Ebene, die im Wesentlichen tangential zur Werkstückkontur im Referenzpunkt orientiert ist, und sucht so gewissermaßen den Bereich um die vorab geschätzten Position des Referenzpunktes ab, bis er aufgrund der Kontaktkraft, etwa infolge eines Hineingleitens des Tasters in einer Bohrung, an einer Weiterbewegung gehindert wird. Dabei zeigt sich der Vorteil, wenn gemäß einer Ausführung die vorab geschätzte Position des Referenzpunktes unter einer nachgiebigen Regelung angefahren wird.

Insbesondere, um ein Hineingleiten eines Tasters in eine einen Referenzpunkt definierende Aussparung sicherzustellen, kann der Manipulator bei dessen Anfahren eine Normalkraft senkrecht zu der oben erläuterten Ebene, die im Wesentlichen tangential zur Werkstückkontur im Referenzpunkt orientiert ist, auf das Werkstück ausüben. In einer bevorzugten Ausführung der vorliegenden Erfindung sind ein Taster und eine Aussparung zur Definition eines Referenzpunktes so ausgebildet, dass sich der Taster bei einem Hineingleiten in die Aussparung selbst zentriert. Beispielsweise kann der Taster eine kegelförmige Spitze und die Aussparung einen kreisförmigen Umfang aufweisen.

Das Antasten von Konturen zur Bestimmung der groben Position des Werkstückes, um Referenzpunkte prozesssicher antasten zu können, und dieses Antasten der Referenzpunkte kann nacheinander derart erfolgen, dass zunächst alle vorgegebenen Konturen angetastet werden, bevor anschließend die Referenzpunkte, deren ungefähre Position damit bekannt ist, angefahren werden. Gleichermaßen kann dies auch abwechselnd derart erfolgen, dass zunächst jeweils Konturen, vorzugsweise in der Nähe von Referenzpunkten, angetastet werden, anschließend Referenzpunkte, deren ungefähre Lage in Bezug auf diese Konturen bekannt ist, bevor anschließend wiederum andere Konturen angetastet werden, um die ungefähre Position weiterer Referenzpunkte zu bestimmen und diese anschließend prozesssicher antasten zu können.

Gemäß einer Ausführung hält ein Manipulator ein zu fügendes Werkstück zunächst in wenigstens zwei, vorzugsweise nicht kollinearen, insbesondere im Wesentlichen senkrecht zueinander orientierten, Kraftkontakten, wenn er es in einer Fügegrundposition ansetzt. Als Kraftkontakt wird dabei ein Kontakt zwischen Werkstück und Manipulator, insbesondere einem Haltewerkzeug, bezeichnet, in dem der Manipulator eine Haltekraft auf das Werkstück ausübt, als Orientierung entsprechend die Richtung der jeweiligen Haltekraft.

Beispielsweise kann ein erster Kraftkontakt kraftschlüssig durch einen Elektromagneten realisiert werden, der bei Aktuierung das Werkstück anzieht. Ein zweiter Kraftkontakt kann zum Beispiel formschlüssig durch einen Absatz realisiert werden, an dem sich das Werkstück abstützt.

Nach dem Ansetzen in einer Fügegrundposition bewegt der Manipulator das Werkstück in Fügerichtung in eine Fügeendposition. Erfindungsgemäß wird dabei einer der Kraftkontakte, beispielsweise der erste, durch einen Elektromagneten realisierte Kraftkontakt geöffnet, sobald dessen Stütz- bzw. Haltefunktion durch ein Werkstück, mit dem das vom Manipulator gehaltene Werkstück gefügt wird, übernommen wird.

Dies ermöglicht eine Umorientierung des das Werkstück haltenden Manipulatorwerkzeugs, so dass ein Konflikt mit Konturen eines Werkstückes, mit dem das vom Manipulator gehaltene Werkstück gefügt wird, vermieden werden kann.

Insbesondere, um ein Vermessen und ein anschließendes erfindungsgemäßes Fügen von Werkstücken kürzere Taktzeiten zu ermöglichen, weist in einer Weiterbildung ein Haltewerkzeug für den Manipulator einen Haltebereich zum, insbesondere kraft- und/oder formschlüssigen, Halten eines Werkstückes, und zusätzlich einen Taster zum Antasten eines Werkstückes auf. Der Haltebereich kann beispielsweise durch einen oder mehrere Elektromagnete und/oder Absätze die oben erläuterten ersten bzw. zweiten Kraftkontakte darstellen, der Taster vorzugsweise ein kegelförmiges Ende zur Selbstzentrierung in einer Aussparung unter einer nachgiebigen Regelung aufweisen. Bevorzugt erstreckt sich der Taster im Wesentlichen rechtwinkelig oder entgegengesetzt zu dem Anlage- bzw. Haltebereich des Haltewerkzeugs, um Konflikte zwischen einem Werkstück und dem Haltebereich beim Vermessen bzw. dem Taster beim Fügen zu vermeiden. Ein Taster im Sinne der vorliegenden Erfindung kann somit insbesondere ein fest mit einem Haltewerkzeug des Manipulators verbundener oder integral mit diesem ausgebildeter Bolzen, Stift oder dergleichen sein, der vorzugsweise rotationssymmetrisch ist und/oder eine Spitze aufweist.

Weitere Vorteile und Merkmale ergeben sich aus den Unteransprüchen und den Ausführungsbeispielen. Hierzu zeigt, teilweise schematisiert:

Fig. 1: eine Draufsicht auf ein Werkstück bei einem Vermessen;

Fig. 2: einen Schnitt längs der Linie II-II in Fig. 1;

Fig. 3A: eine Seitansicht von links oben in Fig. 1 beim Fügen eines Werkstückes gemäß einem Verfahren nach einer Ausführung der vorliegenden Erfindung;

Fig. 3B: einen Schnitt längs der Linie IIIB-IIIB in Fig. 1, 3A mit in Fügegrundposition angesetztem Werkstück;

Fig. 3C: eine Ansicht gemäß Fig. 3B mit Werkstück in Fügeendposition;

Fig. 4A - 4D: eine Seitansicht beim Fügen eines anderen Werkstückes gemäß einem Verfahren nach einer Ausführung der vorliegenden Erfindung;

Fig. 5: den Ablauf der in Fig. 1, 2 gezeigten Vermessung;

Fig. 6: den Ablauf der in Fig. 3A gezeigten Veränderung einer Fügeposition; und

Fig. 7: den Ablauf eines in Fig. 4A - 4D gezeigten Fügens.

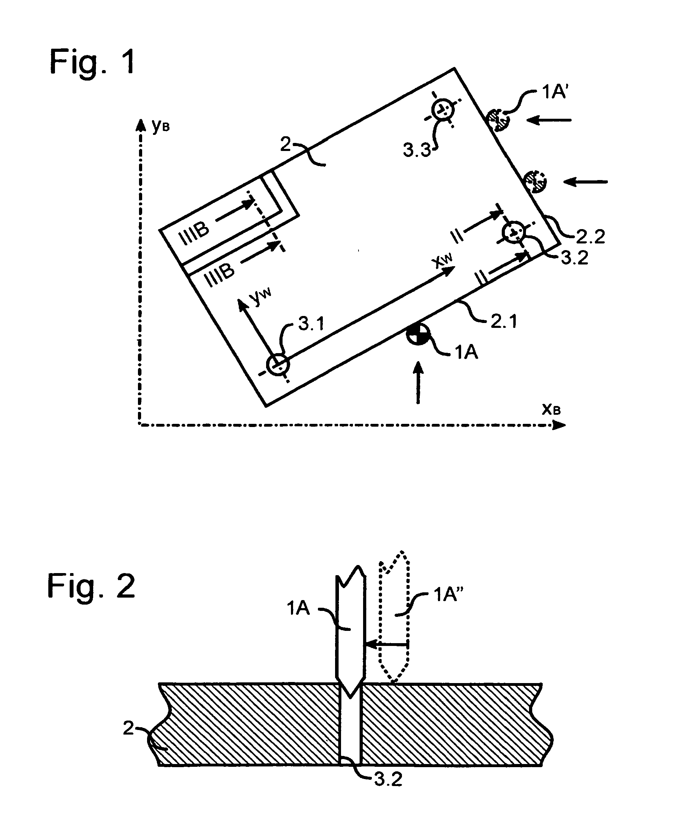

Anhand der Fig. 1, 2 und 5 wird ein mehrstufiges Vermessen einer Position eines Werkstückes 2 auf Basis erfasster Kontaktkräfte gemäß einem Verfahren erläutert, das nicht Gegenstand des Anspruchs 1 ist, sondern bei dem es sich um ein Beispiel handelt, das das Verständnis der Erfindung erleichtert.

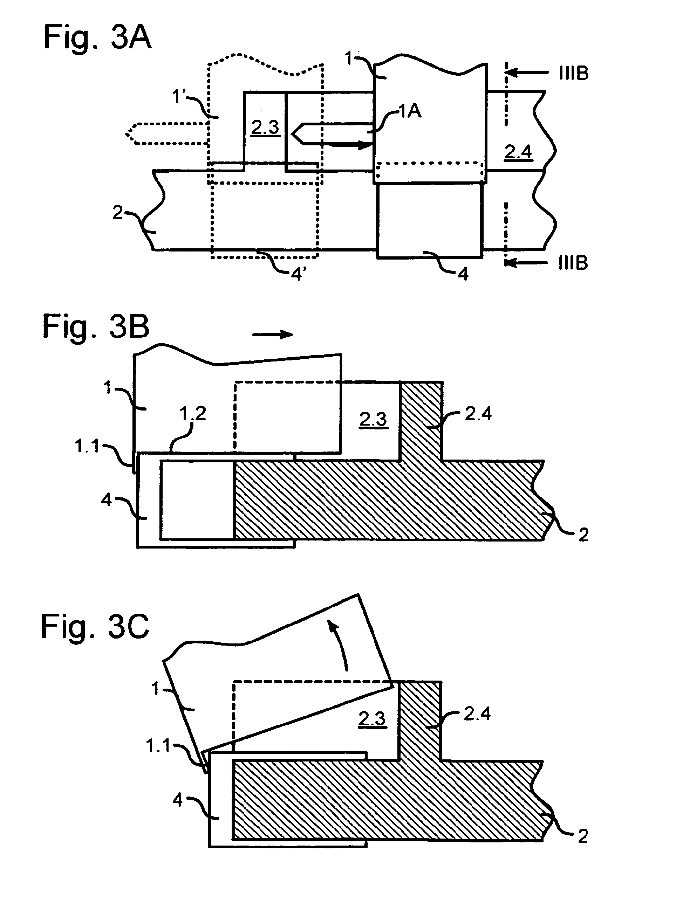

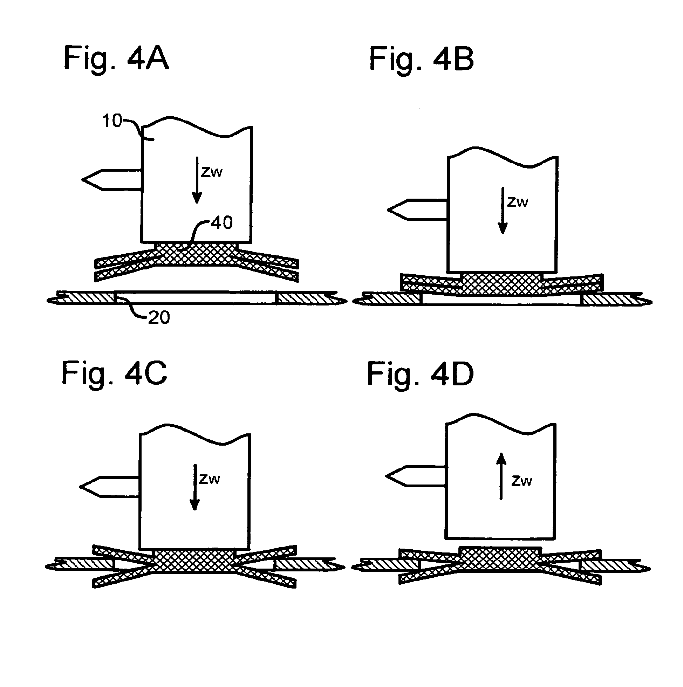

Dabei ist das Werkstück 2, beispielsweise ein Armaturenbrett, nach seiner Anlieferung zunächst innerhalb gewisser Toleranzen beliebig im Arbeitsbereich eines Leichtbauroboters positioniert, von dem in den Figuren stets nur ein Teil eines Haltewerkzeuges 1 gezeigt ist, in den Fig. 1, 2 nur ein rechtwinkelig zu einem Haltebereich 1.1, 1.2, auf den nachfolgend mit Bezug auf Fig. 3, 4 eingegangen wird, angeordneter zylindrischer Taster 1A mit kegelförmiger Spitze (vgl. Fig. 3A). Im Arbeitsbereich ist ein Basis-Koordinatensystem B des Roboters definiert, dessen x- und y-Achsen in Fig. 1 angedeutet sind. Durch die nachfolgend jeweils näher erläuterte Verwendung eines erfindungsgemäßen Haltewerkzeugs 1 mit einem Haltebereich 1.1, 1.2 (vgl. Fig. 3B) und einem Taster 1A (vgl. Fig. 3A) kann ein Werkzeugwechsel zwischen Vermessen und Fügen vermieden und so die Taktzeit reduziert werden.

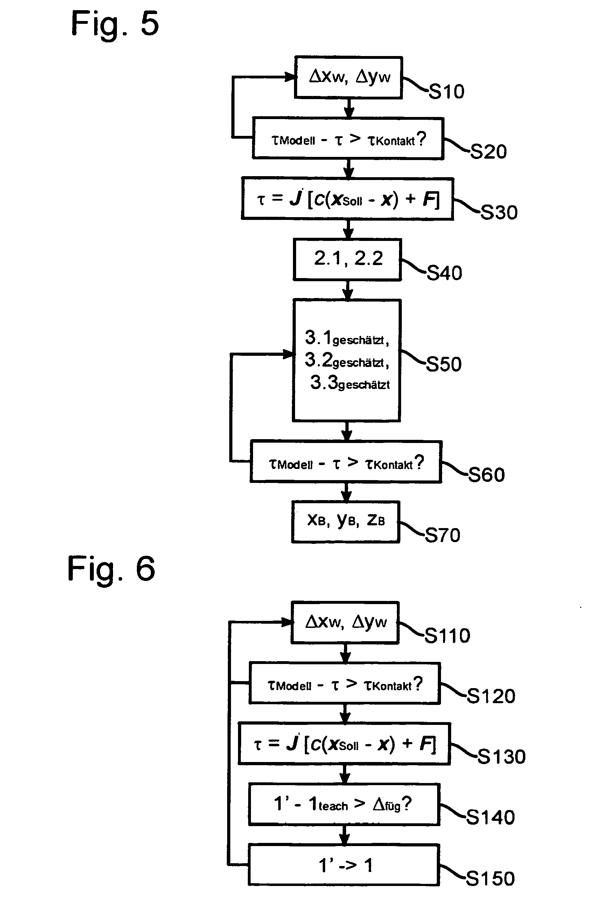

In einer ersten Stufe einer mehrstufigen Vermessung verfährt der Roboter steif PID-geregelt seinen Taster 1A in x- bzw. y-Richtung des Koordinatensystems B, bis dieser nacheinander die Kanten 2.1, 2.2 des Werkstücks 2 an den in Fig. 1 angedeuteten Stellen kontaktiert (vgl. Fig. 5, Schritt S10). Dabei vergleicht eine Steuerungsvorrichtung (nicht dargestellt) die am Roboter gemessenen Antriebsdrehmomente $\tau$ mit theoretischen Antriebsdrehmomenten $\tau_{Modell}$, die gemäß einem dynamischen kontaktfreien Modell zur Erzeugung der erfassten Bewegung des Roboters theoretisch erforderlich wären (Fig. 1: "S20"). Übersteigt die Differenz zwischen diesen Antriebsdrehmomenten, insbesondere betragsmäßig, einen vorgegebenen Grenzwert $\tau_{Kontakt}$, wird hieraus erkannt, dass der Taster 1A eine Kante 2.1 bzw. 2.2 des Werkstücks 2 kontaktiert hat. Daraufhin wird unverzüglich innerhalb 1 Millisekunde in eine nachgiebige kraftbasierte Impedanzregelung umgeschaltet (Fig. 1: "S30"), in der der Taster 1A mit einer virtuellen Feder in Richtung einer Soll-Position $x_{Soll}$ "gezogen" wird.

Durch das Antasten der zwei nicht miteinander fluchtenden Kanten 2.1, 2.2 kann die Position des Werkstücks 2 im Koordinatensystem B des Roboters bereits grob bestimmt werden (Fig. 1: "S40"). Dabei stellt das Umschalten in die nachgiebige Regelung sicher, dass der Roboter die Konturen zunächst steif geregelt schnell anfahren kann, ohne bei Kontakt Werkstück oder Roboter zu beschädigen.

In einer zweiten Stufe werden drei nicht kollineare Referenzbohrungen 3.1 - 3.3 im Werkstück 2 mit dem Taster angefahren. Hierzu bewegt der Roboter den Taster 1A in Positionen $3.1_{geschätzt}$ bis $3.3_{geschätzt}$ (Fig. 1: "S50"), die aufgrund der aus der ersten Stufe grob bekannten Position des Werkstücks 2 geschätzt werden, wobei der Taster in 1A pertubierten, beispielsweise mäanderförmig oder in parallelen Bahnen, um die geschätzten Positionen bewegt wird (vgl. Fig. 2). Dabei wird die Tasterspitze mit einer Normalkraft senkrecht zur Oberflächenebene des Werkstückes auf dieses aufgedrückt, während insbesondere in dieser Ebene (links - rechts in Fig. 2) der Roboter nachgiebig geregelt wird.

Sobald der Taster 1A dabei aus einer neben einer Referenzbohrung liegenden Position, die in Fig. 2 gestrichelt angedeutet und mit 1A" bezeichnet ist, in die durch die Referenzbohrung 3 definierte Referenzpunktposition gelangt, gleitet er unter der aufgeprägten Normalkraft in diese hinein und zentriert sich aufgrund seiner kegelförmigen Spitze und der in der Oberflächenebene nachgiebigen Regelung in dieser Bohrung, wie dies ausgezogen in Fig. 2 dargestellt ist.

Einer Weiterbewegung des Tasters 1A durch den nachgiebig geregelten Roboter, der weiterhin die Suchstrecke abzufahren versucht, wirkt nun eine signifikant größere Kontaktkraft auf den in der Bohrung 3.2 sitzenden Taster 1A entgegen, die in einem Schritt S60 (Fig. 5) erfasst wird. Auf diese Weise können die Positionen der Referenzbohrungen 3.1 - 3.3 schnell, präzise, schonend und prozesssicher bestimmt werden. Aus diesen kann dann insbesondere die Position eines werkstückfesten Koordinatensystems W relativ zum Roboterkoordinatensystem B bestimmt werden.

Nun wird beispielsweise eine Klammer 4 (vgl. Fig. 3) auf eine in Fig. 1 linke oberer Kante des Werkstücks 2 gefügt, wobei die mehrstufige Vermessung unter Umschaltung in eine nachgiebige Regelung auch entfallen kann. Dieser Fügevorgang wird anhand der Fig. 3, 6 erläutert.

In Fig. 3A ist strichliert eine erste Fügegrundposition eingezeichnet, an der der Roboter die Klammer 4 zunächst ansetzt und in Fügerichtung auf das Werkstück 2 aufzuschieben versucht (Index ' in Fig. 3A; Schritt S110 in Fig. 6). Dabei kollidiert die Klammer 4 jedoch mit einem Flansch 2.3 des Werkstücks 2 (vgl. auch Fig. 1). Wie zuvor beschrieben, wird bei Kontakt in eine nachgiebige Regelung umgeschaltet (Fig. 6: "S120", "S130"), in der einer Soll-Bewegung $x_{Soll}$ eine vorgegebene Soll-Kraft F, insbesondere eine konstante Kraft $F_{xy}$ in Fügerichtung und eine Kraft $F_z$ mit sinusförmigem Verlauf senkrecht zu Fügerichtung und -ebene. überlagert wird, um ein Aufschieben auf die Kante zu erleichtern.

Aufgrund der nachgiebigen Regelung erfolgt jedoch trotz der Kollision mit dem Flansch 2.3 keine Beschädigung von Werkstück oder Roboter. Vielmehr wird, sobald das Werkzeug 1 des Roboters mit daran gehaltener Klammer 4 sich aufgrund des Widerstandes nicht mehr bewegt, die dabei erreichte Endpose des Roboters (in Fig. 3A strichliert angedeutet) mit einer geteachten Endlage bei korrekt aufgeschobener Klammer 4 verglichen (Fig. 6: S140). Im vorliegenden Fall erkennt die Steuerungsvorrichtung aufgrund des signifkanten Unterschiedes, dass die Klammer 4 nicht korrekt aufgeschoben wurde. Daher wird die Fügeposition verändert (Fig. 6: S150), indem der Roboter die Klammer 4 seitlich versetzt erneut am Werkstück 2 ansetzt, wie in Fig. 3A - 3C ausgezogen angedeutet. Dieser Vorgang wird solange wiederholt, bis der Roboter die Klammer 4 kollisionsfrei fügen kann oder eine vorgegebene Anzahl von Fehlversuchen erreicht ist.

Anhand der Fig. 3B, 3C wird ein erfolgreicher Fügevorgang erläutert. Dabei setzt der Roboter das Werkstück, gegebenenfalls nach vorstehend mit Bezug auf Fig. 3A beschriebenen Fehlversuchen, in einer Fügegrundposition an und schiebt es leicht auf das Werkstück 2 auf (Fig. 3B). Hierbei hält er die Klammer 4 einerseits in einem ersten Kraftkontakt in vertikaler Richtung mittels eines aktuierten Elektromagneten 1.2, und stützt sie zugleich in einem zweiten Kraftkontakt gegen eine dem Aufschieben entgegenwirkende zweiten Kontaktkraft in horizontaler Richtung formschlüssig in einem Absatz 1.1 des Werkzeugs 1 ab.

Um beim weiteren Fügen eine Kollision des Werkzeugs 1 mit dem Flansch 2.3 des Werkstücks 2 zu vermeiden, löst die Steuervorrichtung während des Aufschiebens den ersten Kraftkontakt, indem der Elektromagnet 1.2 nicht mehr bestromt wird, was eine Umorientierung des Werkzeugs 1 (Fig. 3C) relativ zu der teilweise aufgeschobenen Klammer 4 ermöglicht. Auf diese Weise kann der Roboter mit dem Werkzeugabsatz 1.1 die Klammer 4 vollständig auf das Werkstück 2 aufschieben.

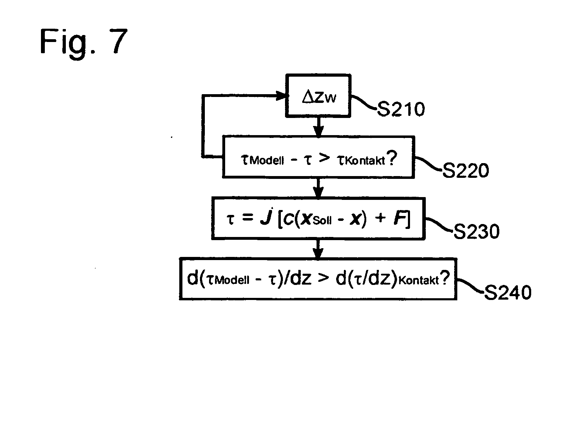

Anhand der Fig. 4, 7 wird das Fügen eines anderen Bauteils, nämlich eines elastischen Stopfens 40, in eine Bohrung 20 erläutert. Man erkennt, dass der Roboter den Stopfen 40 zunächst in vertikaler Richtung auf die Bohrung 20 zu bewegt (Schritt S210 in Fig. 7). Übersteigt eine anhand der Differenz zwischen gemessenen und Modell-Antriebsmomenten erfasste Kontaktkraft einen vorgegebenen Grenzwert, erfasst die Steuervorrichtung den Kontakt mit dem Werkstück (Fig. 7: "S220") und schaltet in eine nachgiebige Regelung um (Fig. 7: "S230"). Unter dieser wird der Stopfen weiter eingefügt und die Kontaktkraft über dem Fügevorschub z erfasst.

Man erkennt in der Bildfolge Fig. 4B → Fig. 4C, dass sich der Stopfen 40 dabei elastisch verformt. Sobald sein unterer Flansch die Bohrung 20 vollständig durchquert hat und elastisch in seine Ausgangslage zurückspringt, reduziert sich die Kontaktkraft, die dem Fügen entgegenwirkt.

Diesen Kraftabfall erfasst die Steuervorrichtung in einem Schritt S240 und kann auf dieser Basis auch bei nachgiebiger Regelung überprüfen, ob der Stopfen 40 ordnungsgemäß in die Bohrung 20 eingesetzt wurde. Zusätzlich kann auch hier wieder die bei Stillstand des Roboters erreichte Endpose mit einer zuvor geteachten Pose verglichen werden, um zu überprüfen, ob der Stopfen 40 vollständig in die Bohrung 20 eingeführt worden ist.

Zusätzlich kann hier ein Geschwindigkeitskriterium verwendet werden. Dies ist insbesondere dann sinnvoll, wenn die Endposition in Fügerichtung nicht genau bekannt ist, falls beispielsweise die Position des Werkstücks 20 variiert, ohne dass es vor dem Fügen jeweils vermessen wird. Sinkt zum Beispiel die Geschwindigkeit des TCPs bzw. Werkstücks 40 für einen vorgegebene Zeitspanne unter einen vorgegebenen Grenzwert, so kann die Steuervorrichtung erfassen, dass der Stopfen 40 nicht mehr weiter in die Bohrung gedrückt werden kann. Dann wird die so erreichte Endpose erfasst und mit einer bei Kontakt der Werkstücke 20, 40, der beispielsweise über den dabei erfasten Kraftanstieg erfasst werden kann, gespeicherten Pose verglichen. Liegt die Differenz beider Posen in einem vorgegebenen Toleranzbereich, wird der Fügevorgang als erfolgreich erfasst.

In einer nicht dargestellten Ausführung fügt der Leichtbauroboter durch die Vorgabe eines Soll-Drehmonentes und/oder eines Soll-Vorschubes eine Schraube in ein Gewinde. Auch dabei wird eine Kontaktkraft, beispielsweise ein Drehmoment in Schraubrichtung, erfasst und der Fügezustand auf Basis dieser Kontaktkraft überwacht. Hat der Roboter seine geteachte Fügeendpose erreicht, und liegt dabei ein zu hohes Drehmoment an, ist die Schraube zu fest angezogen. Liegt hingegen ein zu niedriges Drehmoment an, ist die Schraube nicht fest genug angezogen, weil sich beispielsweise eine Mutter gesetzt hat oder ein Schraubenkopf abgedreht wurde.

Zusätzlich oder alternativ kann die eingedrehte Schraube nach dem Anziehen mit einem definierten Moment um einen vorgegebenen Winkelwert weitergedreht werden, beispielsweise um 90°. Nach dieser Drehung muss das erfasste Moment bei korrekt abgezogener Schraube in einem vorgegebenen Bereich liegen.

Bezugszeichenliste

| | |
|---|---|
| 1; 10 | Haltewerkzeug |
| 1A | Taster |
| 1.1 | Absatz (Haltebereich, formschlüssiger Kraftkontakt) |
| 1.2 | Elektromagnet (Haltebereich, kraftschlüssiger Kraftkontakt) |
| 2 | Werkstück |
| 2.1,2.2 | Kante (Kontur) |
| 2.3, 2.4 | Flansch |
| 3.1 - 3.3 | Bohrung (Referenzpunkt) |
| 4 | Klammer |
| 20 | Werkstück |
| 40 | Stopfen |

**Patentansprüche**

1. Verfahren zum Steuern eines Manipulators, insbesondere eines Roboters, mit dem Schritt:

   Erfassen einer Kontaktkraft zwischen dem Manipulator und einem Werkstück (2; 20) auf Basis tatsächlicher Antriebskräfte ($\tau$) und Antriebskräften ($\tau_{Modell}$) eines dynamischen Modells ($M$ d$^2q$/d$t^2$ + $h(q$, d$q$/d$t)$ = $\tau_{Modell}$) des Manipulators, das den Zusammenhang zwischen kinematischen Größen und Antriebskräften beschreibt; **gekennzeichnet durch** den Schritt: Fügen eines Werkstückes (4; 40) unter nachgiebiger Regelung (S130; S230), wobei ein Fügezustand des unter elastischer oder plastischer Deformation gefügten Werkstückes auf Basis eines erfassten Abfalls der Kontaktkraft überwacht wird

2. Verfahren nach Anspruch 1, **gekennzeichnet durch** den Schritt:

   steif geregeltes Anfahren einer Pose (S10; S110; S210); sowie Umschalten in die nachgiebige Regelung auf Basis einer erfassten Kontaktkraft (S30; S130; S230).

3. Verfahren nach Anspruch 2, **dadurch gekennzeichnet, dass** innerhalb von höchstens 3 Millisekunden nach Eintritt eines Kontaktes (S20; S120; S220) in die nachgiebige Regelung umgeschaltet wird (S30; S130; S230).

4. Verfahren nach einem der vorhergehenden Ansprüche, **dadurch gekennzeichnet, dass** in der nachgiebigen Regelung zum Fügen des Werkstückes, insbesondere wahlweise, sowohl wenigstens eine Soll-Kraft als auch wenigstens eine Soll-Bewegung vorgegeben werden (S130; S230).

5. Verfahren nach einem der vorhergehenden Ansprüche, **dadurch gekennzeichnet, dass** eine Fügestrategie, insbesondere eine Fügegrundposition, auf Basis der erfassten Kontaktkraft, einer unter der nachgiebigen Regelung erreichten Endpose des Manipulators und/oder Geschwindigkeit oder höheren zeitlichen Ableitung des Manipulators erforderlichenfalls verändert wird (S150; Fig. 3A → Fig. 3B).

6. Verfahren zum Steuern eines Manipulators nach einem der vorhergehenden Ansprüche mit den Schritten:

   Halten des Werkstückes mit dem Manipulator in wenigstens zwei Kraftkontakten (1.1, 1.2);
   Ansetzen des Werkstückes in einer Fügegrundposition (Fig. 3A);
   Bewegen des Werkstückes in eine Fügeendposition (Fig. 3B) unter Lösen wenigstens eines Kraftkontaktes (1.2).

7. Verfahren nach Anspruch 6, **dadurch gekennzeichnet, dass** ein, insbesondere bei der Bewegung des Werkstückes in die Fügeendposition gelöster, Kraftkontakt (1.2) kraftschlüssig und/oder ein, insbesondere bei der Bewegung des Werkstückes in die Fügeendposition aufrechterhaltener, Kraftkontakt (1.1) formschlüssig ist.

8. Steuervorrichtung für einen Manipulator, insbesondere einen Roboter, **dadurch gekennzeichnet, dass** sie zur Durchführung eines Verfahrens nach einem der vorhergehenden Ansprüche eingerichtet ist.

9. Computerprogrammprodukt mit Programmcode, der auf einem maschinenlesbaren Träger gespeichert ist und ein Computerprogramm umfasst, das ein Verfahren nach einem der Ansprüche 1 bis 7 ausführt, wenn es in einer Steuervorrichtung nach Anspruch 8 abläuft.

**Claims**

1. A method for controlling a manipulator, in particular a robot, comprising the step:

   detecting a contact force between the manipulator and a workpiece (2; 20) based on real driving forces ($\tau$) and on driving forces ($\tau_{\text{Modell}}$) of a dynamic model ($\boldsymbol{M}d^2\boldsymbol{q}/dt^2 + h(q, d\boldsymbol{q}/dt) = \tau_{\text{Modell}}$) of the manipulator that describes the relationship between kinematic quantities and driving forces;
   **characterized by** the step: joining a workpiece (4; 40) under a compliant control (S130; S230), wherein a joining state of the workpiece, which is joined under elastic or plastic deformation, is monitored based on a detected decrease of the contact force.

2. A method according to claim 1, **characterized by** the step:

   rigidly controlled approaching of a pose (S10; S110; S210); as well as switching into the compliant control based on a detected contact force (S30; S130; S230).

3. A method according to claim 2, **characterized in that** switching into the compliant control (S30; S130; S230) is carried out within at most 3 milliseconds after the occurrence of a contact (S20; S120; S220).

4. A method according to one of the preceding claims, **characterized in that** in particular selectively, at least a desired force as well as at least a desired movement (S130; S230) are predetermined in the compliant control for joining the workpiece.

5. A method according to one of the preceding claims, **characterized in that** a joining strategy, in particular a joining base position, is changed if necessary based on the detected contact force, a final pose of the manipulator reached under the compliant control and/or speed or higher time derivative of the manipulator (S150; Fig. 3A → Fig. 3B).

6. A method for controlling a manipulator according to one of the preceding claims comprising the steps:

   holding the workpiece with the manipulator in at least two force contacts (1.1, 1.2);
   positioning the workpiece in a joining base position (Fig. 3A);
   moving the workpiece into a joining final position (Fig. 3B) by loosening at least one force contact (1.2).

7. A method according to claim 6, **characterized in that** a force contact (1.2), in particular a force contact that is loosened when moving the workpiece into the joining final position, is force-fitting and/or a force contact (1.1), in particular a force contact that is maintained when moving the workpiece into the joining final position, is form-fitting.

8. A control device for a manipulator, in particular a robot, **characterized in that** it is arranged to carry out a method according to one of the preceding claims.

9. A computer program product with program code stored on a machine readable carrier and comprising a computer program which carries out a method according to one of the claims 1 to 7 when it runs in a control device according to claim 8.

**Revendications**

1. Procédé pour commander un manipulateur, en particulier un robot, comprenant l'étape suivante :

   la détection d'une force de contact entre le manipulateur et une pièce (2 ; 20) sur la base de forces d'entraînement réelles ($\tau$) et de forces d'entraînement ($\tau_{\text{Modell}}$) d'un modèle dynamique (M $d^2q/dt^2 + h(q, dq/dt) = \tau_{\text{Modell}}$) du manipulateur, qui décrit la relation entre les grandeurs cinématiques et les forces d'entraînement, **caractérisé par** l'étape suivante : l'assemblage d'une pièce (4 ; 40) à un réglage souple (S130 ; S230), un état d'assemblage de la pièce assemblée sous l'effet d'une déformation élastique ou plastique étant contrôlé sur la base d'une chute détectée de la force de contact.

2. Procédé selon la revendication 1, **caractérisé par** l'étape suivante :

   l'atteinte réglée de façon rigide d'une position (S10 ; S110 ; S210) ; et la commutation dans le réglage souple sur la base d'une force de contact détectée (S30 ; S130 ; S230).

3. Procédé selon la revendication 2, **caractérisé en ce que** la commutation (S30 ; S130 ; S230) dans le réglage souple se produit en maximum 3 millisecondes après l'entrée d'un contact (S20 ; S120 ; S220).

4. Procédé selon l'une quelconque des revendications précédentes, **caractérisé en ce que** dans le réglage souple, pour l'assemblage de la pièce, en particulier sélectivement, à la fois au moins une force théorique et au moins un déplacement théorique sont prédéfinis (S130 ; S230).

5. Procédé selon l'une quelconque des revendications précédentes, **caractérisé en ce qu'**une stratégie d'assemblage, en particulier une position de base d'assemblage, est modifiée si nécessaire sur la base de la force de contact détectée, d'une position finale du manipulateur atteinte à la régulation souple et/ou de la vitesse ou d'une dérivée temporelle plus importante du manipulateur (S150 ; figure 3A → figure 3B).

6. Procédé pour commander un manipulateur selon l'une quelconque des revendications précédentes comprenant les étapes suivantes :

   le maintien de la pièce au moyen du manipulateur dans au moins deux contacts de force (1.1, 1.2) ;
   le placement de la pièce dans une position de base d'assemblage (figure 3A) ;
   le déplacement de la pièce dans une position finale d'assemblage (figure 3B) avec détachement d'au moins un contact de force (1.2).

7. Procédé selon la revendication 6, **caractérisé en ce qu'**un contact de force (1.2), détaché en particulier lors du déplacement de la pièce dans la position finale d'assemblage, est à force et/ou un contact de force (1.1), maintenu en particulier lors du déplacement de la pièce dans la position finale d'assemblage, est à coopération de formes.

8. Dispositif de commande pour un manipulateur, en particulier un robot, **caractérisé en ce qu'**il est conçu pour mettre en oeuvre un procédé selon l'une quelconque des revendications précédentes.

9. Produit-programme informatique comprenant un code de programme, ledit produit-programme étant mis en mémoire sur un support lisible par ordinateur et comportant un programme informatique qui exécute un procédé selon l'une des revendications 1 à 7 lorsqu'il se déroule dans un dispositif de commande selon la revendication 8.

## Fig. 1

## Fig. 2

Fig. 3A

Fig. 3B

Fig. 3C

## Fig. 4A

## Fig. 4B

## Fig. 4C

## Fig. 4D

# Fig. 5

$\Delta x_W, \Delta y_W$ — S10

$\tau_{Modell} - \tau > \tau_{Kontakt}$? — S20

$\tau = J^{\cdot} [C(x_{Soll} - x) + F]$ — S30

2.1, 2.2 — S40

$3.1_{geschätzt}$, $3.2_{geschätzt}$, $3.3_{geschätzt}$ — S50

$\tau_{Modell} - \tau > \tau_{Kontakt}$? — S60

$x_B, y_B, z_B$ — S70

# Fig. 6

$\Delta x_W, \Delta y_W$ — S110

$\tau_{Modell} - \tau > \tau_{Kontakt}$? — S120

$\tau = J^{\cdot} [C(x_{Soll} - x) + F]$ — S130

$1' - 1_{teach} > \Delta_{füg}$? — S140

$1' \rightarrow 1$ — S150

Fig. 7

$$\Delta z_W \quad \text{—S210}$$

$$\tau_{Modell} - \tau > \tau_{Kontakt}? \quad \text{—S220}$$

$$\tau = J\,[c(x_{Soll} - x) + F] \quad \text{—S230}$$

$$d(\tau_{Modell} - \tau)/dz > d(\tau/dz)_{Kontakt}? \quad \text{—S240}$$

**IN DER BESCHREIBUNG AUFGEFÜHRTE DOKUMENTE**

**In der Beschreibung aufgeführte Patentdokumente**

- EP 0901054 A1
- EP 2045049 A2
- EP 1950010 A2